# EUROPÄISCHE PATENTSCHRIFT

(11) **EP 1 941 800 B1**
(45) Veröffentlichungstag und Bekanntmachung des Hinweises auf die Patenterteilung: **02.01.2013**
(21) Anmeldenummer: 07018442.9
(22) Anmeldetag: 20.09.2007
(51) Int. Cl.: A21D 6/00, A21D 15/02, A21C 13/00

(54) **Verfahren zur Herstellung von Back-Vorprodukten**
Method for manufacturing semi finished baking products
Procédé de fabrication de produits semi-finis de cuisson

(30) Priorität: 29.09.2006 DE 102006046658
(43) Veröffentlichungstag der Anmeldung: 09.07.2008
(73) Patentinhaber: Wolfram Ungermann Systemkälte GmbH & Co. KG, 58300 Wetter (DE)
(72) Erfinder: Ungermann, Wolfram, 58285 Gevelsberg (DE)
(74) Vertreter: Döpp, Ludger

(56) Entgegenhaltungen:
- WO-A-95/00028
- FR-A- 2 852 205
- JP-A- 5 068 464
- JP-A- 9 121 752
- US-A1- 2005 212 152

## Beschreibung

Die Erfindung betrifft ein Verfahren zur Herstellung von Back-Vorprodukten.

Durch die DE-A 198 02 299 ist ein Verfahren zur Herstellung und Lagerung von teilgebackenen Backwaren bekannt geworden, wobei die jeweilige Backware in einem Ofen oder einer Ofenanordnung teilgebacken wird und die Ware nach diesem Backen an ihrer Oberfläche mit Wasserdampf und/oder Wasser behandelt wird. Anschließend erfolgt ein Tieffrieren der mit Wasser und/oder Wasserdampf behandelten Ware.

Der DE-C 197 48 850 ist ein Verfahren und eine Aufbereitungsstraße zur Herstellung gegärter und gefrosteter Teiglinge zu entnehmen, umfassend die Schritte Gären von Teiglingen in einem Gärraum und Schockfrosten der Teiglinge in einem Schockfrostraum. Die gegärten Teiglinge werden vor dem Schockfrosten in einem Entfeuchtungsraum entfeuchtet, wobei den Teiglingen die während des Gärprozesses im Bereich zwischen Krume und Kruste zu viel aufgenommene Feuchtigkeit entzogen und damit eine gleichmäßig von außen nach innen, d.h. von der Kruste zur Krume des Teiglings, zunehmende Feuchtigkeitsverteilung eingestellt wird, wobei nach dem Entfeuchten die Krume einen Feuchtigkeitsgehalt von 30 bis 80 % aufweist, der zur Kruste hin bis auf 18 bis 35 % abfällt.

In der EP-B1 0 498 385 wird ein Verfahren zur Lagerung von Teiglingen zur Herstellung von Gebäck beschrieben, bei dem die Teiglinge einer Behandlung mit Wasser sowie zum Tieffrieren einer Kältebehandlung unterzogen und während der Lagerung im tiefgefrorenen Zustand gehalten werden. Die Teiglinge werden zunächst in einer ersten Phase der Kältebehandlung, zumindest in einem äußeren Randbereich, tiefgefroren. Anschließend werden die Teiglinge mit Wasser oder Wasserdampf derart behandelt, dass sich im Bereich der Außenfläche jedes Teiglings eine Randschicht aus Teig mit erhöhtem Wasseranteil ergibt. In einer sich daran anschließenden weiteren Phase der Kältebehandlung wird diese Randschicht gefroren.

Die FR 2852205 A offenbart ein Verfahren zur Vorbereitung von Lebensmittelprodukten mittels Gebläseluft, wobei mindestens eine Phase der Kühllagerung der Produkte gegeben ist, in deren Verlauf mittels eines Verdampfers gekühlte Luft eingeblasen wird, sowie eine Phase der Behandlung mittels Befeuchtung/Erhitzung gegeben ist, in deren Verlauf heiße und feuchte Luft eingeblasen wird.

Durch die WO 95/00028 A ist ein Verfahren zum Abkühlen und anschließendem Konfektionieren von Lebensmitteln bekannt geworden, wobei das mindestens 100°C aufweisende Lebensmittel in einem Kühlraum auf Temperaturen zwischen 98 bis 90°C durch freie Konvektion und anschließend in einem, in Abschnitte unterteilten Kühltunnel adiabatisch auf Schnitt- oder Fülltemperatur des Lebensmittels abgekühlt und befeuchtet und dann in an sich bekannter Weise portioniert, verpackt und konfektioniert wird.

In der JP 5068464 A wird eine Kühleinrichtung zur Aufnahme von zwischenzulagernden, respektive einzufrierenden Teiglingen beschrieben, bei welchem in den gekühlten Warenraum ein Flüssigkeitsnebel eingedüst wird.

Kälteerzeugungseinrichtungen zur Herstellung von Teiglingen werden eingesetzt, um die Teigherstellung zeitlich vom Backzeitpunkt zu entkoppeln sowie zur Steuerung der Reifezeit des Teiges im Sinne der Beeinflussung von Hefe- und Enzymaktivitäten im Teig. Die wesentlichen Verfahren bei der Anwendung der Kältekonditionierung sind:
- Abkühl-, Schnellabkühl- und Schockfrostphasen,
- Tiefkühllagerung (Gärunterbrechung),
- Auftauphasen (Gärverzögerung),
- Gär- und Reifephasen.

Darüber hinaus existieren Verfahren, die gezielt die Aktivität der Hefe und der Enzyme über einen längeren Zeitpunkt verlangsamen, um eine Entwicklung von Aromen innerhalb des Teiges zu ermöglichen.

Allen Arbeitsphasen ist gemeinsam, dass sich die Gefahr einer Austrocknung des Teiges durch den Verlust von Wasser, das Entstehen unterschiedlicher Feuchteschichten innerhalb des Teiglings sowie zwischen den Teiglingen einer Produktionscharge einstellt. Dieser Effekt wird als Desorption bezeichnet. Er entsteht durch die Trocknungswirkung der Kältetechnik (Klimaanlage).

Auswirkung ist ein Qualitätsverlust am Teigling, der sich später in brüchiger Kruste, geringer Ausbundfärbung, geringer Rösche und veränderten sensorischen Eigenschaften äußern kann.

Entzogene Feuchte konnte dem Teigling bislang nicht wieder zugeführt werden, ohne ein Ungleichgewicht der Feuchteverteilung zwischen den inneren und äußeren Teiglingsschichten zu erzeugen.

Ziel des Erfindungsgegenstandes ist es, ein alternatives Verfahren zur Herstellung von Back-Vorprodukten, wie teilgegarten, vollgegarten oder zumindest halbgebackenen Teiglingen, bereitzustellen, mittels welchem eine Desorption der Teiglinge in jedem Fall verhindert werden kann und dadurch eine Qualitätserhöhung des Back-Vorproduktes sowie des späteren Backproduktes herbeigeführt wird.

Dieses Ziel wird mit den Merkmalen des verfahrensgemäßen Anspruchs 1 erreicht.

Vorteilhafte Weiterbildungen des erfindungsgemäßen Verfahrens sind den zugehörigen verfahrensgemäßen Unteransprüchen zu entnehmen.

Anstelle der herkömmlichen Befeuchtungsarten, wie sie im eingangs angesprochenen Stand der Technik abgehandelt werden, kommt beim erfindungsgemäßen Verfahren, respektive der erfindungsgemäßen Einrichtung, ein speziell eingestelltes Aerosol mit Tröpfchengrößen < 10 µm, vorzugsweise 1 bis 5 µm, zum Einsatz. Dieses Aerosol wird, einem weiteren Gedanken der Erfindung gemäß, mit Hilfe einer als Ultraschallzerstäuber ausgebildeten Vernebelungseinrichtung erzeugt. Zur Vernebelung soll vorteilhafterweise hochreines Wasser verwendet werden, welches, einem weiteren Gedanken der Erfindung gemäß, in einer Umkehrosmoseanlage von Keimen, Kalk und Salzen befreit worden ist.

Dieses Aerosol kann bis zu einer Temperatur von + 1°C dergestalt in den Warenraum, d.h. den gelenkten Luftstrom der Kälteerzeugungseinrichtung, eingebracht werden, dass es sich gleichmäßig verteilt und die Teiglinge vollständig umströmen kann. Bedingt durch den geringen Tröpfchendurchmesser kann das Aerosol die Teiglingsoberfläche durchdringen und strömt durch die Poren des Teiglings. Hierzu kommt es entgegen der üblichen Desorption zu einer Sorption. Dem Teigling kann somit aktiv Feuchte zugeführt werden. Durch Zuführung der Feuchte und dem faktischen homogenen Ausgleich der Feuchte im gesamten Teigling werden mehrere Effekte erreicht:

Die mit der Feuchte angereicherten Teiglinge sind vor Austrocknung geschützt und können sich aufgrund der homogenen Feuchteverteilung an allen Stellen gleichmäßig entwickeln. Es gibt keine nennenswerte Feuchtedifferenz zwischen Randschichten, Ober- und Unterseite und dem Kern des Teiglings.

Die Leitfähigkeit des Teiglings für Temperaturänderungen wird positiv beeinflusst. Damit können Abkühlung und Aufheizung deutlich schneller stattfinden. Zeitdauer und Energieaufwand für diese Phasen verringern sich gegenüber Geräten ohne diese Befeuchtungseinrichtung deutlich.

Die Wärmeleitfähigkeit des fertigen Teiglings durch erhöhte Feuchte bleibt bis zum Backen erhalten. Dies bewirkt auch beim Backen eine bessere Temperaturübertragung. Die Backzeit verkürzt sich somit. Die äußeren Flächenbereiche des Teiglings bilden durch die gleichmäßige Feuchte eine homogene und dicke Kruste mit ausgesprochen guter Rösche und Bräunung.

Durch die erfindungsgemäßen Maßnahmen erfolgt eine homogene Durchfeuchtung des Teiglings durch ein feines, per Ultraschall erzeugtes Aerosol mit dem Ziel, eine Kältekonditionierung in Temperaturbereichen zwischen + 35 °C und -35°C in verschiedenen Anwendungen zu erreichen.

Die Back-Vorprodukte können dabei auf Blechen oder Dielen in Transportwagen oder kontinuierlichen Förderzeugen in und aus dem Warenraum bewegt werden.

Der Erfindungsgegenstand ist anhand eines Ausführungsbeispiels in der Zeichnung dargestellt und wird wie folgt beschrieben. Es zeigen:
- Figur 1: Prinzipielle Gegenüberstellung des bisherigen Standes der Technik mit dem Erfindungsgegenstand;
- Figur 2: Prinzipskizze eines eine Kälteerzeugungseinrichtung beinhaltenden Warenraumes;
- Figur 3: Darstellung des Einflusses der Tröpfchengröße auf die Sedimentationsrate bei Wasser;
- Figur 4: Darstellung des Einflusses im Vergleich zur Ultraschallvernebelung auf die relative Feuchte einer Gefrier- und Auftauphase.

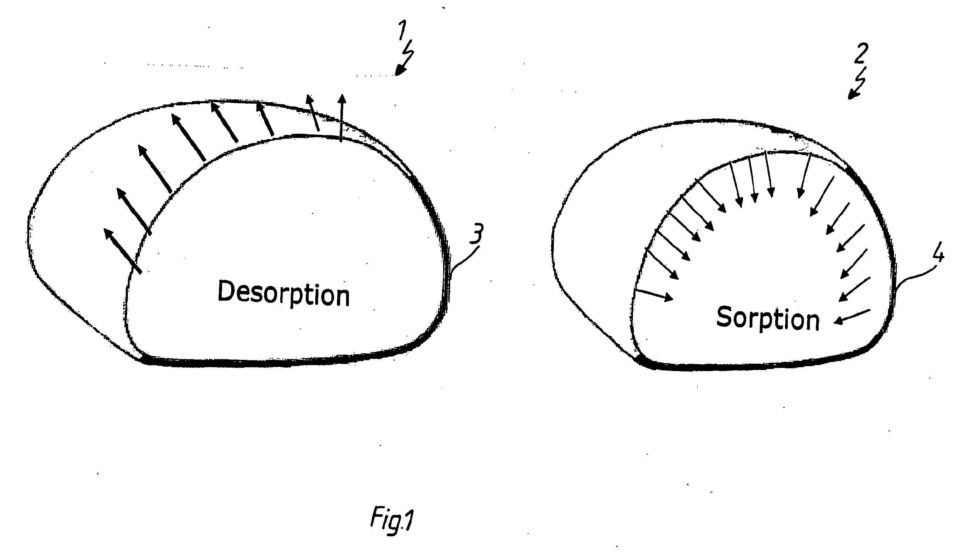

Figur 1 zeigt in Gegenüberstellung den bisherigen Stand der Technik (linkes Bild) sowie das im rechten Bild dargestellte erfindungsgemäße Prinzip. Dargestellt sind beispielsweise zwei Brotteiglinge 1,2.

Beim linken Bild 1 kommt ein Dampfbefeuchter (nicht dargestellt) mit einer Außenfeuchte von ca. 80 bis 90 % zum Einsatz. Hierbei kann die Feuchtigkeit nicht in die Oberfläche 3 des Teiglings 1 eindringen, da die Tröpfchen zu groß sind. Hierbei kommt es zu der unerwünschten Desorption (Entfeuchtung). Eine erneute Zuführung von (entzogener) Feuchte mit heute verwendeten Dampfbefeuchtern ist nicht möglich, sie bewirkt vielmehr eine Kondensation an der Außenseite des Teiglings 1. Der Teigling 1 wird klebrig und läuft im Extremfall in die Breite. Darüber hinaus können unerwünschte Eiweißflecken entstehen.

Im rechten Bild 2 der Figur 1 ist erkennbar, dass das beispielsweise mit Ultraschall erzeugte Aerosol bei einer relativen Außenfeuchte von bis zu 99 % in die Oberfläche 4 des Teiglings 2 eindringen kann. Hierbei kommen Tröpfchengrößen < 5 µm zum Einsatz, die problemlos in die porig ausgebildete Teigoberfläche 4 eindringen und somit zu einer im Wesentlichen homogenen Durchfeuchtung des Teiglings 2 (Back-Vorprodukt) führen. Hierbei findet somit eine Sorption (Durchfeuchtung) des jeweiligen Back-Vorproduktes statt.

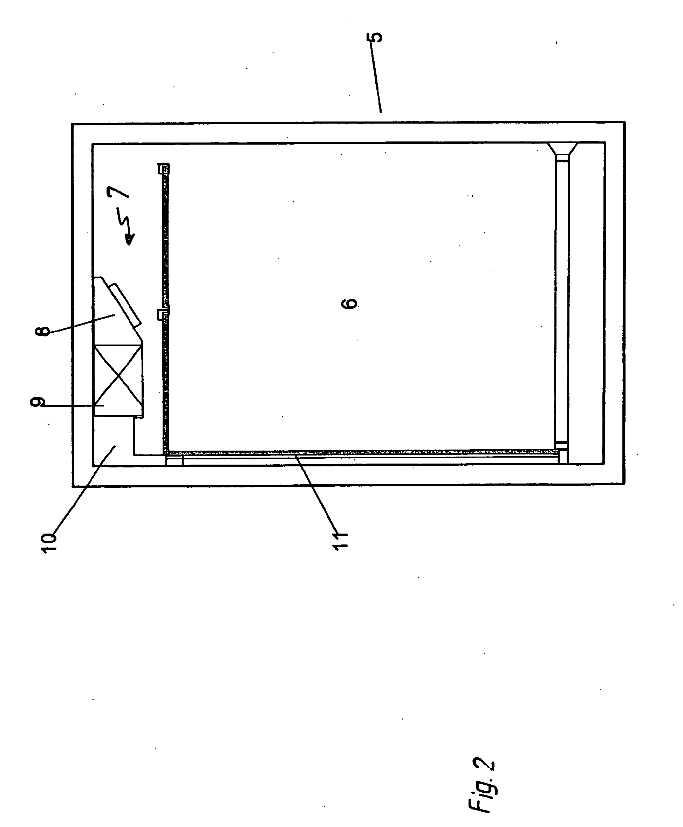

Figur 2 zeigt als Prinzipskizze einen Gärautomaten 5, der einen Warenraum 6 aufweist, innerhalb dessen Back-Vorprodukte, wie beispielsweise grüne, teilgegarte, zumindest halbgebackene oder vollgegegarte Teiglinge (Figur 1-2), zum Beispiel auf Blechen oder Dielen in Transportwagen angeordnet, eingebracht sind. Der hier dargestellte Gärautomat 5 ist eine stationäre Anlage. In analoger Weise, wie auch im Stand der Technik beschrieben, kann das erfindungsgemäße Verfahren auch auf kontinuierliche Durchlaufanlagen angewendet werden. Im Bereich des Gärautomaten 5 befindet sich eine Kälteerzeugungseinrichtung 7, über welche eine definierte Kältekonditionierung in Temperaturbereichen zwischen + 35°C und - 35°C für verschiedenste Anwendungen realisiert werden kann. Die Kälteerzeugungseinrichtung 7 beinhaltet in lediglich angedeuteter Form ein Lüftersegment 8, ein Wärmetauschersegment 9 sowie einen Luftführungsbereich 10, der mit einer ebenfalls nur angedeuteten Luftleittechnik 11 innerhalb des Warenraumes 6 in Wirkverbindung steht.

Des Weiteren kann beispielsweise im Bereich der Luftleittechnik 11 eine Einrichtung von Wasser (nicht dargestellt), wie ein Ultraschallvernebeler oder dergleichen angeordnet werden, mittels welcher ein Aerosol mit einer Tröpfchengröße < 10 µm, vorteilhafterweise 1 bis 5 µm, generiert wird. Zur Zerstäubung wird erfindungsgemäß hochreines Wasser verwendet, welches beispielsweise in einer vorgeschalteten Umkehrosmoseanlage (nicht dargestellt) von Keimen, Kalk und Salzen befreit worden ist. Dieses Aerosol soll in diesem Beispiel bei einer Temperatur von 1°C so in den Warenraum 6, respektive den Bereich der Luftleittechnik 11, eingebracht werden, dass es sich mit dem durch die Kälteerzeugseinrichtung 7 erzeugten Luftstrom gleichmäßig verteilen und die beispielsweise in Figur 1 dargestellten Teiglinge (rechtes Bild) vollständig umströmen kann. Durch den geringen Tröpfchendurchmesser kann das Aerosol die Teiglingsoberfläche durchdringen und strömt durch die Poren des Teiglings. Hierdurch kommt es, entgegen der üblichen Desorption, zu einer Sorption, so dass dem Teigling aktiv Feuchte zugeführt wird.

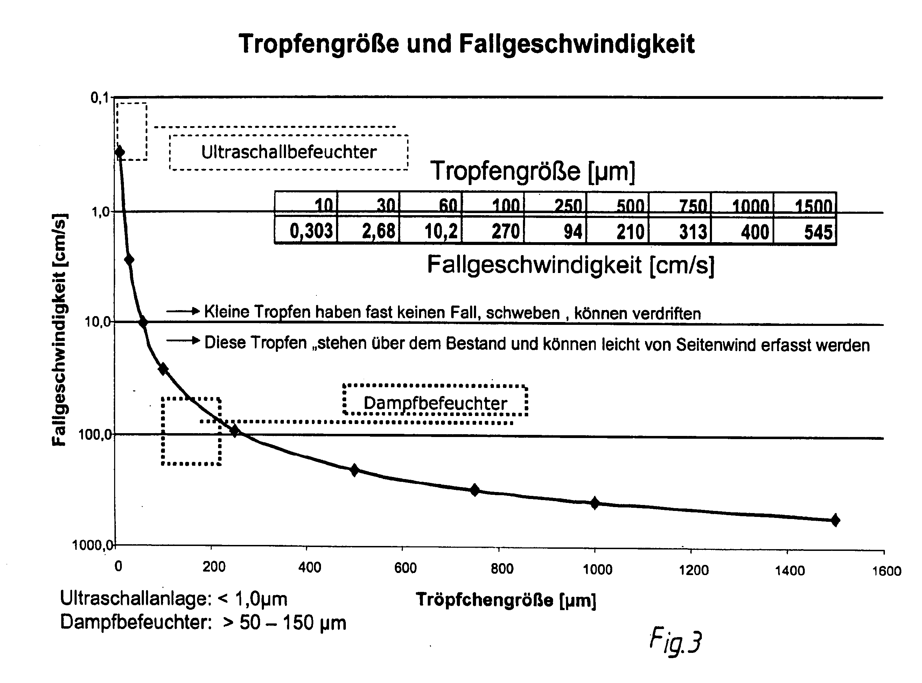

Figur 3 zeigt den Einfluss der Trägerflächengröße auf die Sedimentationsrate bei Wasser und war im direkten Vergleich Dampfbefeuchtung-Ultraschallvernebelung. Erkennbar ist, dass bei reduzierter Tröpfchengröße durch Ultraschallvernebelung gegenüber dem Dampfbefeuchter verbesserte Sedimentationsraten herbeigeführt werden können.

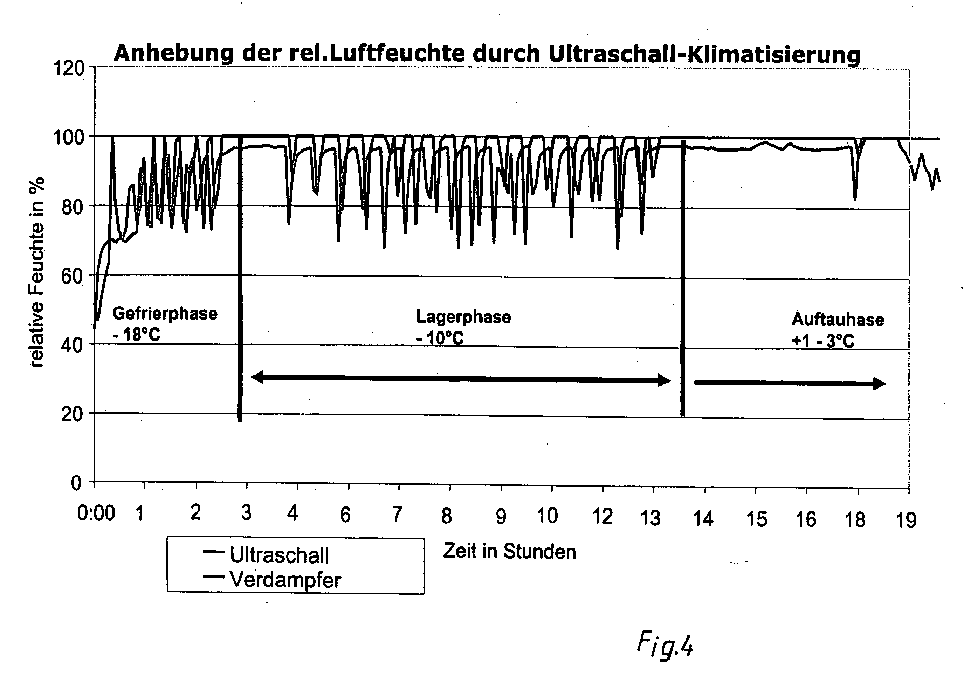

Figur 4 zeigt den Einfluss eines Dampfbefeuchters im Vergleich zur Ultraschallvernebelung auf die relative Feuchte einer Gefrier- und Auftauphase, wobei bei Ultraschallvernebelung ein gleichmäßiger Kurvenverlauf bei erhöhter relativer Feuchte gegeben ist.

## Patentansprüche

1. Verfahren zur Herstellung von Back-Vorprodukten, indem die in einem klimatisierten Warenraum (6) eingebrachten, teilgegarten, zumindest halbgebackenen oder vollgegarten Teiglinge (2) befeuchtet werden, dergestalt, dass dem Luftstrom der Kälteerzeugungseinrichtung (7) ein Aerosol mit definierter Tröpfchengröße zugegeben wird, so dass der mit dem Aerosol versetzte Luftstrom das jeweilige Back-Vorprodukt (2) im Wesentlichen vollständig umströmt und das Aerosol in die Oberfläche (4) des jeweiligen Back-Vorproduktes (2) dergestalt eindringt, dass sich eine im Wesentlichen homogene Durchfeuchtung des jeweiligen Back-Vorproduktes (2) einstellt, wobei dem Luftstrom der Kälteerzeugungseinrichtung (7) ein Aerosol mit einer Tröpfchengröße < 10 µm, insbesondere < 5 µm, beigegeben wird, zur Erzeugung des Aerosols im Wesentlichen hochreines Wasser eingesetzt wird, das zum Einsatz gelangende Wasser vorab in einer Umkehrosmoseanlage von Keimen, Kalk und Salzen befreit wird und das Aerosol bis zu einer Temperatur von + 1°C in den Warenraum (6) eingebracht wird.

2. Verfahren nach Anspruch 1, **dadurch gekennzeichnet, dass** die Befeuchtung der Back-Vorprodukte (2) innerhalb eines stationären Warenraumes (6) durchgeführt wird, wobei die jeweiligen Back-Vorprodukte (2) auf Gargutträgern, wie Blechen, Dielen oder dergleichen im Bereich von Transportwagen angeordnet sind.

3. Verfahren nach Anspruch 1, **dadurch gekennzeichnet, dass** die Befeuchtung der Back-Vorprodukte (2) innerhalb eines als Durchlaufeinrichtung ausgebildeten Warenraumes durchgeführt wird.

## Claims

1. A method for manufacturing semi-finished baking products, wherein the partly cooked, at least partly baked or completely cooked dough pieces (2) which have been introduced into an air-conditioned product room (6) are moistened in such a way that an aerosol having a defined droplet size is added to the air stream of the refrigerating device (7), such that the air stream mixed with the aerosol substantially flows completely around the respective semi-finished baking product (2) and the aerosol penetrates the surface (4) of the respective semi-finished baking product (2) in such a way that a substantially homogenous moisture penetration of the respective semi-finished baking product (2) is achieved, wherein an aerosol having a droplet size of < 10 µm, in particular < 5 µm is added to the air stream of the refrigerating device (7), substantially high-purity water is used for producing the aerosol, the water that is used is previously cleaned from germs, lime and salts in a reverse osmosis plant and the aerosol is introduced into the product room (6) up to a temperature of + 1 °C.

2. A method according to claim 1, **characterized in that** the moistening operation of the semi-finished baking products (2) is performed within a stationary product room (6), wherein the respective semi-finished baking products (2) are placed on carriers of cooking goods, such as sheets, boards or the like in the area of transfer cars.

3. A method according to claim 1, **characterized in that** the moistening operation of the semi-finished baking products (2) is performed within a product room that is designed as a continuous passage device.

## Revendications

1. Procédé de fabrication de produits semi-finis de cuisson, dans lequel on humidifie les pièces de pâte (2) partiellement cuites, au moins semi-cuites ou complètement cuites et introduites dans une chambre de produits climatisée (6) d'une telle manière qu'on ajoute un aérosol ayant une taille de gouttelette définie au flux d'air du dispositif de réfrigération (7), de sorte que le flux d'air mélangé avec l'aérosol essentiellement passe complètement autour du produit semi-fini de cuisson (2) respectif et l'aérosol pénètre dans la surface (4) du produit semi-fini de cuisson (2) respectif d'une telle manière qu'on obtient une pénétration d'humidité essentiellement homogène du produit semi-fini de cuisson (2) respectif, dans lequel on ajoute un aérosol ayant une taille de gouttelette de < 10 µm, notamment de < 5 µm, au flux d'air du dispositif de réfrigération (7), on utilise essentiellement de l'eau de grande pureté pour produire l'aérosol, on purifie auparavant l'eau qu'on utilise des germes, de la chaux et des sels dans une installation d'osmose inverse et on introduit l'aérosol dans la chambre de produits (6) jusqu'à une température de + 1 °C.

2. Procédé selon la revendication 1, **caractérisé en ce qu'**on effectue l'humidification des produits semi-finis de cuisson (2) à l'intérieur d'une chambre de produits (6) stationnaire, les produits semi-finis de cuisson (2) respectifs étant disposés sur des supports de produits de cuisson, tels que des plaques de métal, des planches ou semblable au niveau des chariots transporteurs.

3. Procédé selon la revendication 1, **caractérisé en ce qu'**on effectue l'humidification des produits semi-finis de cuisson (2) à l'intérieur d'une chambre de produits formée comme dispositif de passage en continu.
